(19) Europäisches Patentamt
European Patent Office
Office européen des brevets

(11) EP 4 775 378 A1

(12) EUROPEAN PATENT APPLICATION

(43) Date of publication:
15.07.2026 Bulletin 2026/29

(51) International Patent Classification (IPC):
B29C 48/95 (2019.01)    B29K 23/00 (2006.01)
B29K 67/00 (2006.01)

(21) Application number: 25151608.4

(22) Date of filing: 13.01.2025

(52) Cooperative Patent Classification (CPC):
B29C 48/272; B29C 48/022; B29C 48/92;
B29C 48/95; C08J 3/226; B29C 48/05; B29C 48/06;
B29C 48/07; B29C 48/08; B29C 48/09; B29C 48/10;
B29C 2948/92295; B29C 2948/9279;
B29K 2023/0608; B29K 2023/0625;          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Ingenia Polymers International S.A.
2520 Luxembourg (LU)

(72) Inventors:
• Arefi, Ahmad
Hamilton, L8S 1A9 (CA)
• Charlton, J. Zachariah
Burlington, N3T 5M8 (CA)
• Tzoganakis, Costas
Waterloo, N2V 2S6 (CA)

(74) Representative: Tomkins & Co
5 Dartmouth Road
Dublin 6, D06 F9C7 (IE)

(54) **POLYAMIDE AND POLY(LACTIC ACID) POLYMER PROCESSING AIDS FOR POLYOLEFINS**

(57)    The present invention relates to polymer processing aid compositions for polyolefins, their methods of manufacture and articles made from the compositions as well as use of the compositions for the removal or reduction of sharkskin melt fracture or reduction in the formation of die lip build-up. Compositions of the present invention may also be substantially free of per- and poly-fluoroalkyl substances (PFAS) and in some embodiments substantially free of siloxane.

Fig. 1

EP 4 775 378 A1

(52) Cooperative Patent Classification (CPC): (Cont.)
B29K 2023/0633; B29K 2023/065; B29K 2023/12;
B29K 2023/14; B29K 2067/00; B29K 2067/046;
B29K 2077/00; B29K 2077/10; C08J 2367/04;
C08L 23/04; C08L 23/0815; C08L 23/10;
C08L 71/02

**Description**

**Technical Field**

The present invention relates to the application of compositions of polyamide alone or in combination with poly(lactic acid) as a polymer processing aid (PPA) in thermoplastic extrusion, their methods of manufacture, and articles made from the compositions, as well as use of the compositions for the removal or reduction of sharkskin melt fracture, or reduction in the formation of die lip build-up.

**Background**

Polyolefin extrusion processes - including blown film, cast film, sheet extrusion, profile extrusion, blow molding, wire and cable extrusion coating, and fiber spinning - are run at high throughputs to maximize economic benefit. However, it is known that raising polyolefin extrusion rates above a critical wall shear stress can lead to the onset of flow instabilities which manifest themselves as distortions of the extruded product. Hatzikiriakos, S. G., & Migler, K. B.

(2012), Polymer Processing Additives for Melt Fracture Control in "Applied Polymer Rheology: Polymeric Fluids with Industrial Applications", First Edition, pp 29-58, describes a range of melt extrusion instabilities observed in industry. Above a critical volumetric flow rate, polyolefin extrudates exhibit distortions which increase in severity as the flow rate increases. These distortions are collectively referred to as *"melt fracture".* Above a first critical shear stress the polyolefin extrudate exhibits *"surface melt fracture",* also called *"sharkskin".* Sharkskin appears as a regular pattern of surface roughness causing haze which is undesirable and limits the rate of extrusion. Extrusion at still higher rates can lead to a stick-slip instability or *"oscillating melt fracture".* Extrusion at even higher rates leads to gross, irregular distortions in the extrudate known as *"gross melt fracture".*

*"Polymer Processing Aids"* ("PPAs") are well known to those skilled in the art of polyolefin extrusion and film processing. The addition of low concentrations of PPAs to the polyolefin melt increases the critical shear stress at which sharkskin occurs, allowing for higher throughput rates without the onset of sharkskin. Heretofore, fluoroelastomers and fluoroplastics (collectively "fluoropolymers") have been the established PPA solution to sharkskin in polyolefin extrusion processes. However, the use of fluoropolymers as polymer processing aids is now undesirable due to regulatory and market developments requiring the removal of per- and poly-fluoroalkyl substances ("PFAS") from polyolefins. Regulatory developments on cyclic monomers used in the production of siloxanes and market perception have similarly made these alternatives to fluoropolymers undesirable. Thus, there is a need for a substantially non-PFAS, non-siloxane polymer processing aid to eliminate sharkskin melt fracture. There is a further need for alternative PPAs to minimize any reduction in extruder output due to slippage or surging of the extrusion screw. Ideally, such a PPA will increase specific output of the extruder due to pressure reduction on the die without causing screw slippage. There is a further need for such a PPA to minimize the formation of die-lip buildup (DLBU) in extrusion processes and to have minimal negative effects on film properties including printability.

WO2024147358 discloses the use of biopolymer-based PPAs including poly(lactic acid) (PLA) and poly(butylene succinate). Such biopolymers are shown to be more effective for reduction in DLBU when used in combination with additional additives, including particularly poly(ethylene-co-vinyl alcohol) ("PEVOH" or more commonly "EVOH"). The biopolymers, including PLA, are also shown in use with a poly(ether block amide) ("PEBA") but are not discussed in combination with a homopolymer polyamide or a copolymer polyamide other than PEBA. The inventors teach that where the biopolymer is used in combination with another additive, the biopolymer preferably comprises the major component of the PPA composition.

WO2023017327A1 discloses use of a block copolymer having polyamide blocks and polyether blocks for the reduction of melt defects in polyolefins. Polyamide homopolymers and polyamide copolymers other than polyamide-polyether are not disclosed as polymer processing aids.

EP0308090A2 discloses blends and films of linear polyethylene with polyamides. Polyamide is disclosed as a polymer processing aid and the use of PA 6 (ISO 16396-1:2022 polyamide Type naming conventions are used in the present disclosure) at levels as low as 0.1% is shown to reduce extruder torque, decrease pressure and remove melt fracture from LLDPE at an extrusion temperature of 225 °C. Processing temperatures are not disclosed in all examples but where they are they are above the 223 °C melting point of Nylon 6. Although the use of any thermoplastic polyamide in a range of 0.01 to 3% of the composition is discussed, only examples using Nylon 6 are provided. No specific alternative polyamides other than polyamide 6 are disclosed. The use of a second component to improve the performance of the PA 6 is not disclosed.

WO2024189104 discloses use of a polymer processing aid defined by a solubility parameter difference with the matrix polymer greater than $2\ J^{\frac{1}{2}}cm^{-3/2}$ and a viscosity ratio with the matrix polymer of < 0.3 when measured at 210 °C and $100\ s^{-1}$ shear rate. Such PPAs are preferably polyamides and the use of adjuvants including aliphatic polyesters is disclosed. WO2024189104 discloses the use of polyamides of higher viscosity, which are shown to not function as PPAs.

While polyamides are disclosed as a class no semi-aromatic amorphous polyamides are disclosed. A process for the extrusion of thermoplastic compositions containing the PPAs is disclosed but the importance of the melting point of the PPA relative to the processing temperature and thereby the efficacy of the PPA is not disclosed. Although aliphatic polyester adjuvants are disclosed, no examples are provided, no range of addition or ratio to the PPA is provided, no specific characteristics of the aliphatic polyester such as viscosity, molecular weight are provided.

WO2024/256965A1 discloses compositions of 0.01 to 1% of polyamide in a polyolefin where the composition is substantially free of a polyamide-polyolefin compatibilizer. The disclosure also relates to the use of poly(ethylene glycol) as an additional component of the composition. The examples N1 as compared to N2 and N3 as to N4 compare the performance (Table 4 of the disclosure) of the compositions in clearing melt fracture without and with the additional PEG component. In both cases the partial replacement of polyamide with PEG increase the time required to clear melt fracture from the films. That is the inclusion of poly(ethylene glycol) reduces performance versus polyamide alone.

In contrast to prior art the present disclosure surprisingly shows that poly(lactic acid) of specific properties, used in a narrow range of ratios with specific polyamides can improve the performance of polyamide-based polymer processing aids. The present disclosure also identifies the importance of melting point and processing temperature in formulating polyamide-based polymer processing aids. The present disclosure further identifies specific low melting point and amorphous polyamides as being more useful in covering the range of polyolefin processing temperatures. These compositions, uses and methods improve the performance and reduce the concentration of polyamide-based polymer processing aids required for processing polyolefins.

**Object of the Invention**

Regulatory and market developments require an alternative to per- and poly- fluoroalkyl substances (PFAS) and siloxane polymer processing aids (PPAs). There is a requirement for a substantially non-PFAS, non-siloxane polymer processing aid for polyolefins which can delay the onset of sharkskin melt fracture to higher extrusion rates. There is also a requirement for PPAs to reduce the formation of die-lip buildup. There is a further need for such non-PFAS, non-siloxane PPAs to be effective at low concentrations and to maintain or increase the specific output in an extrusion process. In food contact applications, it is also required for the PPA to be compliant with food contact regulations in the jurisdictions in which it is sold. The PPAs of the present invention meet one or more of these objectives.

**Summary of the Invention**

The present invention relates to polymer processing aid compositions for polyolefins, their methods of manufacture and articles made from the compositions as well as use of the compositions for the removal or reduction of sharkskin melt fracture, or reduction in the formation of die-lip buildup. Compositions of the present invention are also substantially free of PFAS and substantially free of siloxane.

The invention provides compositions comprising a polyolefin, and a polymer processing aid, wherein the polymer processing aid comprises a polyamide. In some embodiments, the polyamide-based PPA is present in an amount of about 0.01 to 1 % in the polyolefin composition. Such compositions are "extrudable polyolefin compositions" useful in polyolefin extrusion processes including blown film, cast film, sheet extrusion, profile extrusion, pipe extrusion, wire and cable extrusion, and extrusion blow moulding. They are useful in the final extrusion process to remove or delay the onset of sharkskin, and/or to reduce die-lip buildup and/or reduce pressure drop across an extrusion die. Such compositions are useful in removing sharkskin under a given shear rate condition or delaying sharkskin to higher extrusion flow rates as compared to polyolefins without the polyamide-based PPA. In other embodiments, the PPA is present in an amount of about 1 to 99 % in a polyolefin carrier polymer. The higher concentration range compositions, called "masterbatch compositions", are useful as an intermediate material to prepare the final extrudable polyolefin composition. Such uses are well known to those of skill in the art.

In some embodiments of the present invention, the polyamide-based PPA is present in an amount of about 0.01 to 1 % in the extrudable polyolefin composition. Suitably, the polyamide may be present in an amount of from 0.01 to 0.7 % based on the total weight of the extrudable polyolefin composition. Preferably the polyamide may be used in an amount of from 0.02 to 0.5 %, more preferably in an amount of from 0.02 to 0.3 %, most preferably in an amount from 0.02 to 0.2 %, for example in an amount from 0.025 to 0.15 %, for example 0.02 to 0.1%, or for example 0.02 to 0.09%, or for example 0.05 to 0.15%, based on the total weight of the extrudable polyolefin composition. In other words the polyamide may be present in an amount of at least 0.01%, or at least 0.02%, or at least 0.025%, or at least 0.02% or at least 0.05% based on the total weight of the extrudable polyolefin composition. The polyamide may be present in an amount of no more than 1%, or no more than 0.7%, or no more than 0.5%, or no more than 0.3%, or no more than 0.2% or no more than 0.15% or no more than 0.1% or no more than 0.09% or no more than 0.015% based on the total weight of the extrudable polyolefin composition.

Also provided is a masterbatch composition comprising a polyolefin; and from 1 to 99 % (of the total composition) of a polymer processing aid, wherein the polymer processing aid comprises a polyamide. Suitably, the polyamide may be present in an amount from 1 to 80 %, or from 1 to 70 %, or from 1 to 60 %, or from 1 to 50 %, or from 1 to 45 %, for example from 1 to 15 %, for example from 1 to 10 %, for example from 1 to 7 %, such as 1.5 to 6 %, for example from 15 to 45 %, for example from 25 % to 45 % based on the total weight of the masterbatch composition. In other words the polyamide may be present in an amount of at least 1%, or at least 1.5%, or at least 15%, or at least 25% based on the total weight of the masterbatch composition. The polyamide may be present in an amount of no more than 99%, or no more than 80%, or no more than 70%, or no more than 60% or no more than 50% or no more than 45% or no more than 10% or no more than 7% or no more than 6% based on the total weight of the masterbatch composition.

In another aspect, the invention provides use of aliphatic and/or semi-aromatic polyamides with a melting point of less than 225 °C, or amorphous semi-aromatic polyamides, as a polymer processing aid to remove or reduce sharkskin melt fracture formation, or reduce the formation of die-lip buildup, in an extrudable polyolefin composition, wherein the polymer processing aid is used in an amount of from 0.01 to 1.0 %, based on the total weight of the extrudable polyolefin composition. Suitably, the polyamide may be present in an amount of from 0.01 to 0.7 % based on the total weight of the extrudable polyolefin composition. Preferably the polyamide may be used in an amount of from 0.02 to 0.5 %, more preferably in an amount of from 0.02 to 0.3 %, most preferably in an amount from 0.02 to 0.2 %, for example in an amount from 0.025 to 0.15 %, for example 0.02 to 0.1%, or for example 0.02 to 0.09%, or for example 0.05 to 0.15%, based on the total weight of the extrudable polyolefin composition. In other words the polyamide may be present in an amount of at least 0.01%, or at least 0.02%, or at least 0.025%, or at least 0.02% or at least 0.05% based on the total weight of the extrudable polyolefin composition. The polyamide may be present in an amount of no more than 1%, or no more than 0.7%, or no more than 0.5%, or no more than 0.3%, or no more than 0.2% or no more than 0.15% or no more than 0.1% or no more than 0.09% or no more than 0.015% based on the total weight of the extrudable polyolefin composition.

In yet another aspect, the invention provides a method for removing or reducing sharkskin formation, or reducing the formation of die-lip buildup, in a polyolefin extrusion process comprising using a polyamide as a PPA wherein the polymer processing aid is used in an amount of from 0.01 to 1.0 %, based on the total weight of the extrudable polyolefin composition and wherein the extrudable polyolefin composition is processed at a temperature above the melting point of the polyamide, or above the glass transition temperature of an amorphous polyamide. Suitably the polyamide may be used in an amount of from 0.01 to 0.7 %, preferably in an amount of from 0.02 to 0.5 %, more preferably in an amount from 0.02 to 0.3 %, most preferably in an amount from 0.02 to 0.2 %, for example in an amount from 0.025 to 0.15 %, for example 0.02 to 0.1%, or for example 0.02 to 0.09%, or for example 0.05 to 0.15% based on the total weight of the extrudable polyolefin composition. In other words the polyamide may be present in an amount of at least 0.01%, or at least 0.02%, or at least 0.025%, or at least 0.02% or at least 0.05% based on the total weight of the extrudable polyolefin composition. The polyamide may be present in an amount of no more than 1%, or no more than 0.7%, or no more than 0.5%, or no more than 0.3%, or no more than 0.2% or no more than 0.15% or no more than 0.1% or no more than 0.09% or no more than 0.015% based on the total weight of the extrudable polyolefin composition.

Suitably, the polyamide of the PPA should be substantially molten at the processing temperature. The processing temperature should be greater than 5 °C below the melting point of the polyamide, preferably equal to or greater than the melting point of the polyamide, more preferably greater than 2 °C above the melting point of the polyamide, still more preferably greater than 5 °C above the melting point of the polyamide and most preferably greater than 7 °C above the melting point of the polyamide in order to ensure that the polyamide is substantially molten.

The polyamide-based PPA of the extrudable polyolefin composition, masterbatch composition, use or method described above may be comprised of an aliphatic or semi-aromatic polyamide of any type, suitably with a melting point below 225 °C, for example, below 220 °C, below 210 °C, preferably below 205 °C, more preferably below 200 °C, such as below 195 °C, for example below 190 °C, or below 185 °C, yet more preferably below 180 °C, such as below 175 °C, below 170 °C, below 160 °C, below 150 °C or below 140 °C. Suitable polyamides may also be amorphous. Suitable polyamides of the present invention shall be construed in a non-limiting way and may include homopolymers, copolymers of 2 or more monomers and blends of 2 or more polyamides.

The polyamide of the present invention may a have a MFR (ASTM D1238 235 °C, 2.16 kg) of greater than 1, for example greater than 2, preferably greater than 3, such as greater than 5, or greater than 10, greater than 20 or greater than 50.

Increasing the molecular weights of the polyamide will move in the direction of lower MFR. However, a minimum molecular weight is desirable in order to minimize the constituents of the molecular weight distribution below 1,000 g/mol for regulatory reasons. Thus, the polyamide of the present invention may have an average molecular weight ($M_w$) of greater than 1,000 g/mol. Suitably the polyamide may have a molecular weight of greater than 2,000 g/mol, preferably greater than 5,000 g/mol.

The use, method or compositions described above may further comprise a poly(lactic acid) ("PLA"). Preferred PLAs of the present invention have a Melt Flow Rate (ASTM D1238, 210°C, 2.16 kg) in the range of 0.1 to 150 g/10 min, for example 0.5 to 100, for example 0.5 to 80, for example 1 to 50, or 0.5 to 30. The poly(lactic acid) may comprise greater than 80% of the L-isomer of lactic acid or lactide monomer. For example, the PLA may comprise greater than 90% L-isomer, for example greater than 95% L-isomer, greater than 97% I-isomer, such as greater than 99% L-isomer.

The PPA comprised of PA and PLA may be used in a combined amount of from 0.01 to 1 %, based on the total weight of the extrudable polyolefin composition. The PA and PLA may be used in a combined amount of from 1 to 99 % of the masterbatch composition. The PPA comprised of polyamide and the PLA may be present in the polymer processing aid in a weight ratio of PA to PLA from about 10:90 to about 95:5. Preferably the polyamide and the PLA are present at a ratio of from about 25:75 to 95:5, for example from 30:70 to 95:5, more preferably from 50:50 to 95:5, for example from 55:45 to 95:5, more preferably at a ratio from 60:40 to about 90:10, and most preferably at a ratio of 65:35 to 85:15, for example from 70:30 to 80:20, or from 65:35 to 85:15 or from 70:30 to 85:15, for example about 75:25. It has surprisingly been found that the combination of the polyamide with PLA in these narrow range of ratios improves the efficiency of certain PA-PLAPPAs.

The polymer processing aid may be dispersed in the polyolefin compositions at an average dispersed particle size of 0.1 to 50 microns, for example 0.2 to 30 microns, more preferably 0.3 to 20 microns, still more preferably 0.5 to 15 microns, for example 1 to 10 microns, and most preferably 0.8 to 7 microns.

Either or both the polyamide and the PLA may have a linear or a non-linear architecture. The polyamide and the PLA may be branched through the inclusion of branching agents during polymerization. Alternately, the PLA may be branched through the addition of a chain extender or through free radical mediated chemistry in a post-reactor process.

The extrudable polyolefin composition may further comprise a poly(oxyalkylene) preferably poly(ethylene glycol) ("PEG"). PEG has been suggested as an additional component in many PPA compositions. However, the current work discloses that PEG is not an efficient additional component with polyamide in that it can reduce the PPA performance as compared to an equivalent addition rate of polyamide. Particularly in the range of 400 ppm and above, or 300 ppm and above, or 250 ppm and above, in extrudable polyolefin compositions the inclusion of PEG can lead to loss of extruder output and an increase in DLBU. However, it has surprisingly been found that low levels of PEG, below those typically demonstrated in prior art, can offer some benefit in improvement of gloss, elimination of die lines without significant loss of output or increase in DLBU. Extrudable polyolefin compositions of the current invention may contain 0.001% to 0.05% of a poly(oxy alkylene), such as from 0.003 to 0.03%, such as 0.003 to 0.025%, such as from 0.003 to 0.02%, such as below 0.015%, such as below 0.01%, such as from 0.003 to 0.0095%, such as from 0.005 to 0.0095%, such as from 0.0075 to 0.0095%, more preferably from 0.005 to 0.02%, such as from 0.01 to 0.02%. The poly(oxyalkylene) is preferably PEG.

The PPA comprised of PA and PLA and/or PAG may be used in a combined amount of from 0.01 to 1 %, based on the total weight of the extrudable polyolefin composition. The PA and PLA and/or PAG may be used in a combined amount of from 1 to 99 % of the masterbatch composition.

The polyolefin may be selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

A composition comprising a linear polyolefin may further comprise from 0.1 to 50 % of the total composition of low-density polyethylene (LDPE). The LDPE may be present in an amount of 0.1 to 99%, for example 0.1 to 15 %, suitably from 0.1 to 5 %, preferably 0.1 to 0.5 % in an extrudable polyolefin composition. The LDPE may be present in an amount of 5 to 99 %, suitably 5 to 40 %, preferably 10 to 35% in a masterbatch composition where the remainder of the carrier resin is a linear polyolefin; or the LDPE can be used as the exclusive carrier resin for the masterbatch composition.

The invention also provides an extruded polyolefin product whenever produced using the composition or the methods described above. Non-limiting examples of extruded polyolefin products of the present invention include films, including both monolayer and multilayer films, pipe, extruded profiles, blow molded articles and the like.

The non-PFAS, non-siloxane extrudable polyolefin compositions of the present invention are useful in removing, reducing the occurrence, or delaying the onset of melt fracture to higher throughputs in polyolefin conversion processes including extrusion and in particular blown and cast film extrusion, profile extrusion, extrusion blow molding, and fiber spinning. The compositions are also useful in reducing extrusion pressure in various extrusion processes including blown and cast film extrusion, profile extrusion, extrusion blow molding and fiber spinning. The compositions are also useful in reducing die-lip buildup in various extrusion processes.

**Detailed Description of the Invention**

The invention relates to polyolefin compositions showing improved extrusion properties. The invention also relates to the methods of manufacture of the polyolefin compositions and articles made from the polyolefin compositions.

In another aspect, it relates to Polymer Processing Aids (PPAs) comprised of polyamide to improve the extrusion properties of polyolefin compositions. In another aspect, it relates to PPAs comprised of a blend of two or more polyamides used to improve the extrusion properties of polyolefin compositions. In another aspect, it relates to PPAs comprised of a blend of polyamide(s) with PLA used to improve the extrusion properties of polyolefin compositions.

The particulars of the invention shown herein are by way of example. They are meant to illustrate various embodiments of the invention and are not meant to limit the scope of the invention.

Given below are the condensed (by no means exhaustive) customary definitions known in the art, of which certain terms which may aid in the description of the invention.

'Masterbatch' is a concentrated mixture of pigments and/or additives which are encapsulated or dissolved during a heating and mixing process into a carrier polymer which is then cooled and cut into a granular shape. A masterbatch can be added to a base polymer in order to deliver the desired concentration of pigments or additives to the base polymer.

'Base Polymer' is the polymer which is to be colored, functionalized, stabilized or otherwise modified by additives or masterbatch. This may also be referred to as the 'letdown resin' by those familiar with the art.

'Carrier Polymer' is the polymer or polymer blend that, when combined with fillers, colorants or additives, will encapsulate them to form a masterbatch.

'Copolymer', is defined in the 'Compendium of Polymer Terminology and Nomenclature, IUPAC Recommendations, 2008' by RSC Publishing (hereafter referred to as the IUPAC Compendium) as a polymer derived from more than one species of monomer.

'Die-Lip Buildup', (DLBU) is the accumulation of extrudate material on the exits of an extrusion die (the 'die lips').

'Melt Flow Rate' (MFR) is as defined in ASTM D1238-20. Units of measure are in grams per 10 minutes.

'Molecular Weight' ($M_w$) in regards to a polymer, means the weight-average molecular weight, as defined in the IUPAC Compendium, unless stated otherwise.

'Melting Temperature' means the temperature or range of temperatures at which a substance is observed to transition to a liquid-like state.

'Melting Point' ($T_{pm}$) means the Melting Peak Temperature at which a substance is observed to transition to a liquid-like state as determined by differential scanning calorimetry in accordance with ASTM D3418-21.

'Melt Temperature' (also 'Processing Temperature') means the temperature of the molten polymer as measured by a thermocouple mounted flush to or preferably immersed in, the molten polymer at the exit of an extruder or melt compounding device and prior to entry into any forming die or mold. Although the temperature of the molten polymer may not be homogenous due to differences in heating and shear history, as is known in the art, the measurement of Melt Temperature shall be considered to represent the average temperature of the molten polymer at the point of measurement. In order to avoid confusion with the term Melting Temperature, the Melt Temperature is preferably referred to as the Processing Temperature.

'Substantially Molten' with regards to the PPAs of the present invention, which may be semi-crystalline or amorphous polymers, means the PPAs are at or above their Melting Point in the case of semi-crystalline polymers or are at or above the glass transition temperature in the case of amorphous polymers.

'Substantially Free' with regards to the content of a polymer or polymer additive means below the levels that would intentionally be included in a polymer composition. Substantially free may still allow for levels of unintentionally added substances. Substantially free permits trace amounts of less than 10 ppm and preferably less than 1ppm.

All percentages described in this document shall refer to the percentage on a weight basis of the total composition, unless specifically stated otherwise.

Disclosed herein is an extrudable polyolefin composition of:

    a. a polyolefin, and
    b. from 0.01 to 1.0 % (of the total composition) of a polymer processing aid, wherein the polymer processing aid comprises an aliphatic or semi-aromatic polyamide, and wherein the polyamide is either

        i. semi-crystalline having a melting point below 210 °C, or
        ii. amorphous having a glass transition temperature of less than 150 °C

and the composition is extruded at a processing temperature equal to or greater than the melting point or glass transition temperature of the polyamide.

The extrudable composition may further comprise poly(lactic acid).

The composition may further comprise additional polymer additives including poly(oxy alkylenes), the hindered phenol antioxidants, phosphite antioxidants including polymeric liquid phosphite antioxidants, hydroxylamine antioxidants, catalyst neutralizers including metal carboxylates, hydrotalcites or zinc oxide, anti-blocking agents, slip agents, anti-static agents, and pigments, as is known in the art.

Also disclosed is a masterbatch composition of:

    a. a polyolefin, and
    b. from 1 to 80 % (of the total composition) of a polymer processing aid,
    wherein the polymer processing aid comprises an aliphatic or semi-aromatic polyamide and wherein the polyamide is either

        i. semi-crystalline having a melting point below 210 °C, or
        ii. amorphous having a glass transition temperature of less than 150 °C and wherein the composition is extruded at a processing temperature equal to or greater than the melting point or glass transition temperature of the polyamide.

The masterbatch composition may further comprise poly(lactic acid).

The masterbatch composition may further comprise from 1 to 95 % of additional polymer additives including the hindered phenol antioxidants, phosphite antioxidants, catalyst neutralizers including metal carboxylates, hydrotalcites or zinc oxide, anti-blocking agents, slip agents, anti-static agents, and pigments, such masterbatch compositions being useful to deliver combinations of the polymer processing aid and other polymer additives to a polyolefin extrudable composition.

**The Polyolefin**

Polyolefins suitable for use in the present compositions include linear or branched polyolefins. In particular, polyolefins useful in the present invention include polypropylene, high-density polyethylene, linear low-density polyethylene, medium density polyethylene, polybutene, copolymers thereof, and including ethylene vinyl acetate copolymers, acid copolymers including ethylene-methacrylic acid and ethylene-acrylic acid copolymers, and combinations thereof. Such polyolefins may be produced by any means known in the art including free radical high-pressure processes and via catalyzed processes including by chrome catalyst, Ziegler-Natta catalyst and single-site catalysts including metallocene catalysts.

In some embodiments, the polyolefin may comprise a substantially linear polyolefin. Suitably, the polyolefin may comprise a substantially linear polyethylene or polyethylene copolymer. In some embodiments the linear polyethylene may have a density of between 0.91 and 0.965 g/cm$^3$.

In some embodiments, the polyolefin comprises a linear low-density polyethylene (LLDPE) with a density of between about 0.91 and 0.925 g/cm$^3$ inclusive. This may be selected from the group comprising: butene, hexene, octene, or other low (short-chain) alpha-olefin copolymers of polyethylene. In some embodiments the LLDPE may have a MFR (190 °C, 2.16 kg) of less than 10, preferably less than 5, for example less than 4, for example, less than 3.5, such as less than 3, such as less than 2.5, such as less than 2, such as less than 1.5 or less than 1. Examples of such LLDPEs include LyondellBasell Petrothene GA502024 and ExxonMobil Chemical Company LL 1001X31. Narrow molecular weight distribution ($M_w/M_n$ < 3, for example less than 2), low melt flow rate (MFR < 2 g/10 min) linear low-density polyethylene copolymers are known to be prone to sharkskin and can benefit from the use of polymer processing aid compositions of the present invention. In particular, narrow molecular weight distribution, low melt flow rate (MFR < 2g/10 min) metallocene linear low-density polyethylene copolymers are known to be especially prone to sharkskin and can benefit from the use of PPA compositions of the present invention.

In some embodiments, the polyolefin comprises a medium-density polyethylene (MDPE) with a density between about 0.925 and 0.940 g/cm$^3$. This may be selected from the group comprising: butene, hexene, or other low alpha-olefin copolymers of polyethylene. In some embodiments the MDPE may have a MFR (190 °C, 2.16 kg) of less than 10, preferably less than 5, for example less than 4, for example, less than 3.5, such as less than 3, such as less than 2.5, such as less than 2, such as less than 1.5 or less than 1.

In some embodiments, the polyolefin comprises a high-density polyethylene (HDPE) with a density of equal to or greater than about 0.940 g/cm$^3$. This may be selected from the group comprising: butene, hexene, or other low alpha-olefin copolymers of polyethylene. It may also be a homopolymer HDPE. In some embodiments the MDPE may have a MFR (190 °C, 2.16 kg) of less than 10, preferably less than 5, for example less than 4, for example, less than 3.5, such as less than 3, such as less than 2.5, such as less than 2, such as less than 1.5 or less than 1.

In some embodiments, the polyolefin may comprise a branched low-density polyethylene (LDPE) with a density of between about 0.91 and 0.94 g/cm$^3$. LDPE is not particularly prone to sharkskin melt defects, but LDPE is often blended with linear polyolefins in compositions of the present invention. LDPEs that are not prone to sharkskin may still exhibit die-lip buildup and can benefit from the polymer processing aids of the current invention in reducing di-lip buildup. LDPEs of the present invention include LyondellBasell Petrothene NA219000.

In some embodiments, the polyolefin may be a blend of polyolefins. Blends of polyolefins may be used to impart specific properties to the finished polyolefin article. In some embodiments the polyolefin may be a blend including a lower density plastomer or elastomer component. Such lower density polyolefins may be used to impart specific properties including toughness or sealing properties for film applications.

In some embodiments, the polyolefin may be a polypropylene. Such polypropylenes can include homopolymer polypropylene (hPP), random copolymer polypropylene (RCP), impact copolymer polypropylene (ICP) or blends thereof. Examples of polypropylenes of the present invention include Braskem FF030F2. While polypropylenes are not typically prone to sharkskin melt fracture, they can exhibit die-lip buildup and can benefit from the polymer processing aids of the current invention in reducing die lip buildup.

**The Polyamide**

The polyamides of the present invention have repeating units linked by amide bonds. Such a definition is to be non-limiting in that it shall include both polyamide homopolymers and polyamide copolymers of two or more monomers. It may include blends of two or more polyamides. Suitable polyamides may be aliphatic polyamides, or semi-aromatic polyamides. Suitable polyamides of the present invention exclude aromatic homopolymer polyamides.

Polyethylene may be extruded in a range of temperatures - above the melting point of the particular polyethylene, in film, profile, pipe extrusion and blow molding. Processing in polyolefin blown film applications may most commonly be in the range of 180 °C to 230 °C for example, but within the wide range of polyolefin extrusion processes much wider windows are possible. In polyethylene extrusion blow molding a lower range of 170 °C to 220 °C is common. Without wishing to be constrained to theory, it is believed that the polyamide should be substantially molten (i.e. at or above its melting point) in order to function more efficiently as a PPA. Thus, a polyamide with a melting point below 225 °C is preferred.

In the case where poly(lactic acid) *is not* included as part of the PPA composition, the polyamides of the present invention suitably have a peak melting point below below 210 °C, preferably below 205 °C, more preferably below 200 °C, such as below 195 °C, below 190 °C, still more preferably below 185 °C, such as below 180 °C, below 175 °C, below 170°C, below 165 °C, below 160 °C, below 150 °C, or below 140 °C. The polyamides of the present invention may also be amorphous with a glass transition temperature below 150 °C. The polyamides with the lowest melting points in this range, or those that are amorphous, will be efficient in a broader range of polyolefin processing temperatures than those with higher melting points.

In the case where poly(lactic acid) is included as part of the PPA composition, the polyamides of the present invention suitably have a peak melting point below 225 °C, for example below 220 °C, for example below 210 °C, preferably below 205 °C, more preferably below 200 °C, such as below 195 °C, below 190 °C, still more preferably below 185 °C, such as below 180°C, below 175 °C, below 170 °C, below 165 °C, below 160 °C, below 150 °C, or below 140 °C. The polyamides of the present invention may also be amorphous with a glass transition temperature below 150 °C. The polyamides with the lowest melting points in this range, or those that are amorphous, will be efficient in a broader range of polyolefin processing temperatures than those with higher melting points.

Suitable aliphatic polyamide homopolymers of the present invention include polyamide 11 (PA 11) and polyamide 12 (PA12). Such polyamides have an additional advantage in that they can be made from renewable sources. Without wishing to be constrained by theory, it is believed that polyamides with a larger number of amide units per unit weight, may have a higher affinity for the die wall which may tend to improve performance of the polyamide as a PPA. Unfortunately, for linear aliphatic polyamide homopolymers, increasing amide content correlates with an increase in the melting point which narrows the temperature range where the polyamide is efficient as a PPA for polyolefins. Copolymers of polyamides, depending on their specific structure and monomers - can be designed to provide both higher amide content and lower melting points than can be achieved with linear aliphatic polyamides. In some aspects of the invention, copolymer aliphatic or semi-aromatic polyamides are preferred.

preferred copolymer polyamides are either amorphous, with a glass transition point below 150 °C, or have a melting point below 225 °C, for example below 210 °C. Preferred copolymer polyamides may have a larger number of amide units per unit weight than polyamide 12 homopolymer.

Aliphatic polyamide copolymers of the present invention include polyamide 5/10, polyamide 5/13, polyamide 6/10, polyamide 6/12, polyamide 6/66, polyamide 6/66/12, polyamide 6/66/610, and polyamide 10/10 (according to ISO 16396-1:2022 polyamide naming conventions, which are used throughout the present disclosure). Examples of aliphatic polyamide copolymers of the present invention include Cathay PA510 (PA 5/10, $T_{pm}$=218 °C), Cathay PA513 (PA 5/13, $T_{pm}$=208 °C), Ube Nylon 5024B (PA 6/66, $T_{pm}$=192 °C), Ube Nylon 5034B (PA 6/66, $T_{pm}$=192 °C), Ube Nylon 6434B (PA 6/66/12, $T_{pm}$=188 °C), Celanese Elvamide 8061 (PA 6/66/610, $T_{pm}$=156 °C), Elvamide 8063 (PA 6/66/610, $T_{pm}$=158 °C) and Elvamide 8066 ($T_{pm}$=115 °C). Due to their lower melting point of about 156 to 158 °C, PA6/66/610 are preferred polyamide copolymers of the present invention.

Semi-aromatic polyamides of the present invention include PA 6i/6t made from hexamethylene diamine, isophthalic acid and terephthalic acid. Examples of amorphous PA 6i/6t grades suitable for use in the present invention include NY-Clear 6I/6T (Nycoa, USA). Due to the absence of a melting point, enabling use across the range of polyolefin processing temperatures, amorphous polyamides with a glass transition temperature of less than 150 °C are a preferred polyamide copolymer.

The polyamide of the present invention may have an average molecular weight of greater than 1,000 g/mol. Suitably the polyamide may have a molecular weight of greater than 2,000 g/mol, preferably greater than 3,000 g/mol, yet more preferably greater than 4,000 g/mol, for example greater than 5,000 g/mol.

The polyamides useful in the present invention have a Melt Flow Rate (ASTM D1238, 235 °C, 2.16 kg) greater than 1 g/10 min, for example greater than 2, or greater than 3, greater than 5, greater than 10, such as greater than 20, greater than 50 or greater than 100.

Since increasing molecular weight correlates with decreasing MFR, the minimum molecular weight identified is identified as 1000 g/mol, for example, 2,000 g/mol, such as 5,000 g/mol. This range provides sufficient molecular weight to provide thermal stability, with a minimum content below 1,000 g/mol which is considered more migratory, while allowing for a range of MFRs greater than 1 (235 °C, 2.16 kg).

In one aspect of the invention the polyamide component of the PPA is comprised of a blend of two or more polyamides. In another aspect, it relates to PPAs comprised of a blend of polyamide(s) with PLA used to improve the extrusion properties of polyolefin compositions.

A blend of polyamides can be a blend of two or more polyamides of the same type, with different molecular weights. For example, a blend of two grades of PA 6/66/610 with MFR (235 °C, 2.16 kg) of 14 MFR and 15.7 respectively. A blend of two or more polyamides of the same type with different MFRs can improve properties of the PPA favourable for performance, such as by increasing shear thinning, or coating efficiency. Where a blend of polyamides of the same type is used they preferably have a difference in MFR (235 °C, 2.16 kg) of > 0.5, more preferably greater than 1, such as greater than 2, or greater than 5 or greater than 10. Where the blend of 2 or more polyamides is of different types, they can have the same or different MFR.

### The Poly(Lactic Acid)

Poly(lactic acid) useful in the present invention should be construed in a non-limiting manner. PLAs include both homo- and copolymers and blends of one or more such polymers. The PLAs may have a narrow or wide molecular weight distribution. The PLAs may have a primarily linear architecture or may be branched. PLAs suitable for use in the present invention can be produced from either or both of the D-isomer or L-isomer of the lactic acid or lactide monomer. For reasons of economics, preferred PLAs of the present invention are primarily of the L-isomer. Preferred PLAs of the present invention are >80% L-isomer, more preferably >90% L-isomer and most preferably > 95% L-isomer.

Preferred PLAs suitable for use in the present invention have a Melt Flow Rate (ASTM D1238, 210 °C, 2.16 kg) in the range of 0.1 to 150 g/10 min. Preferred PLAs useful as the polyester of the present invention have a MFR in the range of 0.5 to 100, for example 0.5 to 80, for example 1 to 50, for example 0.5 to 15.

Examples of PLAs useful in the present invention include Ingeo Biopolymer 3001D, 3051D, 3052D, 4043D, 4044D, 6302D, 6060D (Natureworks, Plymouth, MN USA) and Luminy L175, LX175, LX530, LX930, and LX975 (TotalEnergies Corbion, Gorinchem, The Netherlands).

In some embodiments the PLA contains a minimum number of crosslinks or branches to provide an increase in viscosity, an increase in shear thinning or an increase of elasticity. Branching can be accomplished by any means known in the art, including through the use of multifunctional branching agents incorporated during the polymerization process, or via post reactor modification through the addition of a chain extender containing reactive functional groups such a glycidyl methacrylate ("GMA") or by radical-mediated coupling for example by a peroxide. The chain extender can be incorporated into the PPA by any means known in the art. Chain extenders may be incorporated via melt extrusion and may be extruded with the PLA in a first extrusion step in order to provide the increase in viscosity, increase in shear thinning or increase in elasticity of the PLA. The resulting branched PLA can then be incorporated in the PPA composition of the present invention in a subsequent step. Alternately, the chain extender can be incorporated in the PPA composition of the present invention in a single step. Examples of chain extenders of the current invention include Joncryl 4400 and Joncryl 4468 (BASF, Ludwigshafen Germany). Branching can also be accomplished via radical mediated chemistry including through the use of organic peroxides or ultraviolet radiation. Branching via radical mediated chemistry can be accomplished in a first step to generate the branched PLA prior to incorporation into the masterbatch or extrudable composition.

### The Poly(oxyalkylene)

In one aspect of the invention the PPA contains a poly(oxyalkylene) also known as a poly(alkylene oxide) or poly(alkylene glycol) ("PAG"), used here interchangeably.

In one embodiment of the present invention the poly(oxyalkylene) is a poly(ethylene glycol). The PEG may be of any average molecular weight, preferably from 1,000 g/mol to 100,000 g/mol, more preferably from 1,000 to 20,000 g/mol, still more preferably from 3,000 g/mol to 20,000 g/mol, such as 3,350 g/mol, or 8,000 g/mol. In a preferred embodiment of the present invention, the PEG has a molecular weight of 1,000 to 20,000 grams/mole. In a more preferred embodiment of the present invention the polyethylene glycol has a molecular weight of 2,000 to 10,000 grams/mole. An example of polyethylene glycol useful in the present invention is Dow Carbowax 8000.

### Other Polymer Additives

The compositions of the present invention may also contain additional polymer additives as are known in the art. Additional polymer additives which can be added to the composition of the present invention, include, but are not limited to hindered phenol and phosphite antioxidants including polymeric liquid phosphite antioxidants, catalyst/acid neutralizers include the hydrotalcites, zinc oxide, and the metal carboxylates including calcium, zinc, potassium, magnesium, lithium and sodium stearates. Other polymer additives that can be included in the composition of the present invention include slip additives, anti-blocking additives, antistatic agents, ultraviolet light absorbers (UVAs), and hindered amine light stabilizers (HALS).

Hindered phenols are known as antioxidants for polyolefins. Hindered phenols particularly useful in the present invention include, but are not limited to: octadecyl-(3-(3,5-di-t-butyl-4-hydroxyphenol)propionate) ("AO 1076"; CAS Number 2082-79-3), pentaerythritol tetrakis (3-(3,5-di-t-butyl-4-hydroxyphenol)propionate) ("AO 1010"; CAS Number 6683-19-8), 1,3,5-tris(4-tert-butyl-3-hydroxy-2,6-dimethylbenzyl)-1,3,5-triazine-2,4,6-(1H,3H,5H)-trione ("AO 1790"; CAS Number 40601-76-1), 1,3,5-tris(3,5-di-tert-butyl-4-hydroxybenzyl)-1,3,5-triazine-2,4,6(lh,3h,5h)-trione ("AO 3114"; CAS Number 27676-62-6), and 1,3,5-trimethyl-2,4,6-tis(3,5-di-tert-butyl-4-hydroxybenzyl)benzene ("AO 1330", CAS Number 1709-70-2).

Phosphites and phosphonites are also known as antioxidants for plastics. They are predominantly aromatic phosphites and phosphonites. Phosphites and phosphonites useful in the present invention include, but are not limited to: tris-(2,4-di-t-butylphenyl)phosphite ("AO 168", CAS Number 31570-04-4), bis (2,4-di-t-butylphenyl) pentaerythritol diphosphate, ("AO 626", CAS Number 26741-53-7), Tetrakis(2,4-di-tert-butylphenyl)[1,1-biphenyl]-4,4'-diylbisphosphonite ("AO PEPQ", CAS Number 38613-77-3), bis (2,4-di-t-cumylphenyl) pentaerythritol diphosphate ("AO 9228", CAS 154862-43-8), and Phosphorous acid, mixed 2,4-bis(1,1-dimethylpropyl)phenyl and 4-(1,1-dimethylpropyl)phenyl triesters; ("AO 705", CAS 939402-02-5), polymeric liquid phosphites including those disclosed in US Patent No. US 8,981,042 and including Doverphos LGP-12 and Doverphos LGP-12LV (Dover Chemical Corp; USA).

Metal carboxylates useful in the present invention include the metal stearates, including calcium stearate, zinc stearate, magnesium stearate, and lithium stearate.

Slip additives useful in the present invention include erucamide (CAS Number 112-84-5) and oleamide (CAS Number 301-02-0).

Anti-blocking additives useful in the present invention include synthetic silica (CAS Number 112926-00-8), diatomaceous earth (CAS Number 68855-54-9), nepheline syenite (CAS Number 37244-96-5), talc (CAS Number 14807-96-6), sodium calcium aluminosilicate hydrate (CAS Number 1344-01-0), and calcined Kaolin (CAS Number 92704-41-1).

Antistatic Additives useful in the present invention include glycerol monostearate (CAS Number 31566-31-1).

UVAs useful in the present invention include 2-Hydroxy-4-(octyloxy)benzophenone ("UVA 81"; CAS Number 1843-05-6), and 2-(4,6-bis-(2,4-dimethylphenyl)-1,3,5-triazin-2-yl)-5-(octyloxy)-phenol ("UVA 1164"; CAS Number 2725-22-6).

HALS useful in the present invention include 1,3,5-tirazine-2,4,6-triamine,N,N'''-[1,2-ethanediylbis[[[4,6-bis-[butyl(1,2,2,6,6-pentamethyl-4-piperidinyl)amino]-1,3,5-triazine-2-yl]imino]-3,1-propanediyl]]bis[N',N''-bis91,2,2,6,6-pentamethyl-4-piperidinyl)- ("HALS 119"; CAS Number 106990-43-6), Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] ("HALS 944"; CAS Number 71878-19-8), 1,6-Hexanediamine, N, N'-bis(2,2,6,6-tetramethyl-4-piperidinyl)-polymer with 2,4,6-trichloro-1,3,5-triazine, reaction products with N-butyl-1-butanamine an N-butyl-2,2,6,6-tetramethyl-4-piperidinamine ("HALS 2020"; CAS Number 192268-64-7), Poly [(6-morpholino-s-triazine-2,4-diyl)[2,2,6,6-tetramethyl-4-piperidyl) imino]- hexamethylene [(2,2,6,6-tetramethyl-4-piperidyl) imino]] ("HALS 3346"; CAS Number 82451-48-7), 1,6-hexanediamine, N,N'-bis(2,2,6,6-tetramethyl-4-piperidinyl)-, polymers with morpholine-2,4,6-trichloro-1,3,5-triazine ("HALS 3529", CAS Number 193098-40-7) and butanedioic acid, polymer with 4-hydroxy-2,2,6,6-tetramethyl-1-piperidineethanol ("HALS 622", CAS Number 65447-77-0).

**Theory**

Polyamides are used in industry for a variety of purposes, including, but not limited to, automotive compounds, industrial and household goods, as barrier layers in food packaging. It has been found that low levels of 0.01 to 1.0 % of certain polyamides can act as polymer processing aids for polyolefins. It has been found that the polyamide-based processing aids of the present invention provide improved performance as polymer processing aids for polyolefins when the polyolefin is processed at a temperature where the polyamide is substantially molten. Given the range of processing temperatures used for polyolefins, aliphatic polyamides and semi-aromatic polyamides that are amorphous or have a melting point of below 225 °C are preferred. Polyamides with even lower melting points provide a broader range of polyolefin processing temperatures under which the PPA performs optimally.

Without wishing to be constrained by theory, it is believed that the polyamide-based polymer processing aids in the present invention function similarly to the fluoropolymer PPAs of prior art. That is, the polymer processing aids coat the extrusion die wall, in particular the die exit, and induce a slip velocity between the PPA coating and the polyolefin being processed. The polyamide-based PPAs of the present invention are believed to efficiently achieve this.

It is believed that specific polyamides can function as PPAs. By selecting specific polyamides with specific ranges of physical and chemical properties more preferred selections of polyamides useful as PPAs can be made. Adapting the teachings of fluoropolymer processing aids, the polyamide-based PPA should be immiscible with the polyolefin, should be able to adhere to the metal or metal oxide of the extrusion die, should readily spread and form a coating layer on the metal extrusion die to form a slip layer, have a low work of adhesion with the polyolefin in order to promote slip, and should possess sufficient thermal and chemical stability.

In order to find application in large volume food packaging applications, the PPAs should preferably also be non-migratory, suitable for food contact, and not have a large negative effect on haze or clarity of films.

The PPAs suitable for use in the invention are based on aliphatic or semi-aromatic polyamides. The amide functional groups are believed to promote bonding to the metal oxide surface of an extrusion die. Polyamides are believed to have a high affinity for the die wall. A higher amide content may be expected to improve affinity to the extrusion die wall and reduce miscibility with the polyolefin matrix, which may tend to improve performance as a PPA. However, in the case of aliphatic polyamide homopolymers, a higher amide content also correlates with higher melting point which raises the temperature range where the polyamide is efficient as a PPA. It is believed that coating the die by the polyamide is more efficient when the polyamide is substantially molten - I.e. when the processing temperature of the extrudable composition is equal to or greater than the melting point of the polyamide. A solid, unmelted polyamide may still adhere to the die wall and promote slip of the polyolefin but as it is not molten it will not spread over and sufficiently and uniformly coat the die. In comparison, the molten polyamide will be able to deform more readily under shear, spread and more quickly and substantially coat the die. So, while the polyamide-based PPA can provide some PPA performance when processed below its melting point it is believed to act more efficiently when processed above its melting point. The prior art has focused on polyamides such as PA 6 (Tm = 220-225 °C) with relatively high melting points and more recently with PA12 (Tm = 177-180 °C) which is still somewhat limiting with regards to the range of polyolefin processing temperatures.

Other factors affecting the coating efficiency of the polyamide-based PPAs of the present invention are the molecular weight, molecular weight distribution and structure of the polyamide, which affects its viscosity, shear thinning properties and elasticity. The polyamide should also preferably be dispersed in the polyolefin in an average dispersed particle size of 0.1 to 50 microns, for example 0.2 to 30 microns, more preferably 0.3 to 20 microns, still more preferably 0.5 to 15 microns, for example 1 to 10 microns, and most preferably 0.5 to 7 microns at the extrusion die in order to promote efficient coating of the die wall. This particle size is achieved through a combination of the selection of a polyamide with suitable rheological properties, and processing conditions.

The polyamide should have sufficient molecular weight so that it has good thermal stability and is non-migratory in the finished polyolefin article. However, a minimum MFR is suggested for better performance of the polyamide. Since increasing molecular weight correlates with decreasing MFR, the minimum average molecular weight of a preferred polyamide is 1000 g/mol, for example, 2,000 g/mol, such as 5,000 g/mol. This range provides sufficient molecular weight to provide thermal stability, with a minimum content of polyamide chains in the molecular weight distribution below 1,000 g/mol which is considered more migratory, while allowing for a range of MFRs above 1 (235 C, 2.16 kg).

The use of a PLA in combination with the polyamide has been found to improve the performance of the polyamide-based PPA. An additional advantage is cost. PLA may be less expensive than many of the polyamides of the present invention, and so the cost-performance ratio of the polyamide based PPA is also improved with inclusion of the PLA.

**Extrudable Polyolefin Compositions and Masterbatches**

Extrudable polyolefin compositions of the present invention are useful in polyolefin extrusion processes including blown film, cast film, sheet extrusion, extrusion blow molding, fiber spinning, and profile extrusion in reducing or eliminating melt fracture including sharkskin as described in the foregoing. As little as 0.01 to 1.0 % based on the total weight of the polyolefin composition, of the polyamide or polyamide and PLA PPA is required in order to reduce or delay melt fracture. Such compositions are extrudable polyolefin compositions. Suitably extrudable polyolefin compositions contain from 0.01 to 1.0 % of the PPA, suitably from 0.01 to 0.7 %, preferably in an amount of from 0.02 to 0.5 %, more preferably in an amount from 0.02 to 0.3 %, most preferably in an amount from 0.02 to 0.2 %, for example in an amount from 0.025 to 0.15 % based on the total weight of the polyolefin composition.

Extrudable compositions of the present invention can be prepared by polyolefin producers in their post reactor pelletizing operations. Pelletizing is typically achieved by extrusion through a die via a twin-screw extruder, melt pump or similar equipment as is known in the art. Numerous techniques can be employed to introduce the PPA components, as well as other polymer additives as is known in the art, to the post reactor polyolefin stream. The PPA can be dosed directly to the polyolefin stream where it is mixed into the polymer prior to pelletization. The storage, handling and dosing systems for the PPA are well known in the art. However, in some post-reactor pelletizing operations the required feeding systems may not be available, or it may be otherwise desirable to handle and feed the PPA, and optional additional additives via a masterbatch. This can be achieved by the preparation of a masterbatch of a higher concentration of the PPA and optional additional additives in a polyolefin carrier polymer.

The use of masterbatches is well known in the art. Producing a masterbatch of a higher concentration of the PPA components to be let down into the base polymer to achieve the final extrudable composition can improve the accuracy in formulating the extrudable composition. The use of a masterbatch can also allow the dosing of the PPA in combination with other polymer additives via a single masterbatch.

Compositions of the present invention useful as masterbatches for polyolefins contain from 1 to 99 weight % of the polyamide-based PPA in a polyolefin carrier polymer. Suitably, the polyamide may be present in an amount from 1 to 80 %, or from 1 to 70 %, or from 1 to 60 %, or from 1 to 50 %, or from 1 to 45 %, for example from 1 to 15 %, for example from 1 to 10 %, for example from 1 to 7 %, such as 1.5 to 6 %, for example from 15 to 45 %, for example from 25 % to 45 % based on the total weight of the masterbatch composition.

The polyolefin carrier polymer used in the masterbatch compositions of the present invention is preferably compatible with the base polymer in which the masterbatch will be let down. Preferably the polyolefin carrier polymer used in the masterbatch composition is miscible with the base polymer. By way of example a polyethylene carrier is a preferred carrier polymer for a masterbatch of the present invention used to modify a polyethylene base polymer. If the base polymer is an LLDPE, then the polyethylene carrier polymer of the masterbatch is preferably a polyethylene, and more preferably an LLDPE.

The use of a masterbatch composition of the present invention allows polyolefin producers to accurately prepare extrudable compositions of the present invention and thereby sell a fully formulated polyolefin with good processing characteristics to downstream converters. The polyolefin producer may include other polymer additives in their fully formulated polyolefin. Additional polymer additives which may be included by a polyolefin producer include poly(oxyalkylene), hindered phenol and phosphite antioxidants, liquid polymeric phosphite antioxidants, catalyst/acid neutralizers including hydrotalcite, zinc oxide, and the metal carboxylates including calcium, zinc, potassium, magnesium, lithium and sodium stearates. Other polymer additives that can be included are slip additives, anti-blocking additives, and antistatic agents. These polymer additives can optionally be included in a PPA masterbatch composition of the present invention. Inclusion of these additives in addition to the PPA of the present invention in the masterbatch may simplify or improve the handling and feeding of multiple additives to the polyolefin.

In some cases, the downstream processor such as a film producer may not want to purchase a fully formulated polyolefin. The use of a PPA masterbatch allows converters to customize the composition of a base polymer to meet the particular needs of their converting process. The masterbatch allows the converter to adjust the active level of PPA in an extrudable composition of the present invention to meet the particular requirements of individual processing equipment and products.

Thus, the use of a masterbatch of higher concentrations of the PPA and optional additional additives in the polyolefin compositions of the present invention are useful to both the polyolefin producer and the downstream converter. Higher concentration masterbatches (for example, 25-95 %, or 25-45%) are more common for polyolefin production where they can be added during post reactor extrusion operations. Lower concentration masterbatches (for example 1-25 %, or 2-10%) are more commonly used by polyolefin processors, where they can be dosed directly to film, pipe or profile extruders, for example.

The compositions of the present invention are differentiated from the prior art in that they are substantially fluorine free, siloxane free, and remove, reduce the appearance of or delay the onset of sharkskin. The compositions of the present invention may offer additional benefits in polyolefin extrusion including reduced extrusion pressures, increased output, stable output, and reduced die lip buildup.

The compositions of the present invention are differentiated from prior art disclosing polyamide based PPAs in that they disclose the use of PLA as a second component to the PPA composition, with particular efficacy in a surprisingly narrow range of polyamide to PLA ratio. Further, the present invention discloses the use of blends of polyamides, and blends of polyamides with PLA as PPAs. Further still, the present invention discloses the importance of processing temperature relative to the melting point of semi-crystalline polyamides and the use of low melting point polyamides in order to widen the range of efficacy of polyamide-based PPAs.

**Examples**

The following examples are presented for illustrative purposes only and are not intended to limit the scope of the invention.

The list of materials used in the capillary rheometer studies as well as the materials used in the blown film studies are listed in Table 1.

Table 1: List of Materials

| Identifier | Manufacturer and Grade | Description, Properties* |
|---|---|---|
| LLDPE1 | Exxon Mobil LL 1001X31 | Butene copolymer LLDPE, 1 MFR (190 °C, 2.16 KG), 0.918 g/cc density |
| LLDPE2 | LyondellBasell Petrothene GA502024 | Butene copolymer LLDPE, 2 MFR (190 °C, 2.16 KG), 0.918 g/cc density |
| FKM1 | 3M Dynamar FX5920A | Fluoroelastomer and PEG PPA containing a small amount of inorganic partitioning agent. |
| PEG8 | Clariant Polyglykol 8000 P | PEG; Mw = 8,000 g/mol. |
| AO1 | BASF Irganox B 900 | Antioxidant blend of 80% Irgafos 168 20% Irganox 1076 |
| AO2 | BASF Irganox B225 | Antioxidant blend of 50% Irgafos 168 50% Irganox 1010 |
| PLA1 | Total Energies Corbion LX175 | Poly(lactic acid), MFR = 6 g/10 min (210 °C, 2.16 kg), $T_{pm}$ = 155C |
| PA12-A | Arkema Orgasol 2002 EXD NAT1 | PA 12, $T_{pm}$ = 177C, MFR = 45 (235 °C, 2.16kg) |
| PA12-B | Ube Ubesta 3012U | PA 12, $T_{pm}$ = 180C, MFR = 153 (235 °C, 2.16kg) |
| PA6/66-A | Ube Nylon 5034B | PA6/66, $T_{pm}$ = 192C MFR=4 (235 °C, 2.16kg) |
| PA6/66-B | Ube Nylon 5024B | PA6/66, $T_{pm}$ = 192C MFR=9 (235 °C, 2.16kg) |
| PA6/66/12 | Ube Nylon 6434B | PA6/66/12, $T_{pm}$ = 188C MFR=5 (235 °C, 2.16kg) |
| PA6/66/610-A | Celanese Elvamide 8061 | PA6/66/610, $T_{pm}$ = 156C MFR=14 (235 °C, 2.16kg) |
| * Polyamide melting points are from supplier datasheets. Melt Flow Rates are as measured. | | |

In order to improve the accuracy of dosing of the PPAs, masterbatches were prepared according to the compositions found in Table 2 using the components listed with descriptions in Table 1. LLDPE2 received in pellet form was ground to a 12 Mesh top size and was used as the carrier polymer for all of the masterbatches. 6 kg of each recipe was weighed out batchwise to two decimal accuracy on a digital scale. For additives present at quantities less than 0.5 kg, mass was measured in grams to two decimal place accuracy on a digital scale. The weighed batches were tumble blended for 2 minutes if all additives were solid and high speed mixed for 5 minutes if a liquid component was present in the recipe.

The masterbatch formulations of Table 2 were fed by a loss in weight feeder to a Coperion ZSK30 corotating twin screw extruder; equipped with a 30 mm diameter, 36 length/diameter (L/D) set of screws. A low-shear screw design was used. The ZSK30 extruder is equipped with 6-barrel sections. From the feed section to the final barrel section before the die, the barrel zones were set to temperatures as listed in Table 2. The extruder was fitted with an Econ EWA 50 pelletizer set up for underwater pelletization. The pelletizer adapter (transition from extruder to die) temperature and the die temperature are set as in Table 2. In the case of masterbatches containing polyamides, the compounding conditions were set to ensure processing temperatures above the melting point of the PA. All masterbatches were extruded at 300 RPM at a rate of approximately 18.3 kg/hr.

Table 2: Masterbatch Recipes

| Masterbatch Identifier | Masterbatch Composition | | | Compounding Equipment Setpoints (Temperature, °C)* |
|---|---|---|---|---|
| | PPA | AO | Carrier Resin | |
| CMB | 3% FKM1 | 0.1% B900 | 96.8% LLDPE2 | 110-140-160-170-180-180, 170, 170 |
| CMB2 | 5% PEG8 | 0.2% B225 | 94.8% LLDPE2 | 110-140-160-170-180-180, 170, 170 |
| MB1 | 5% PA12-A | 0.2% B225 | 94.8% LLDPE2 | 90-150-185-185-185-185-185-185 |
| MB2 | 3.75% PA12-A | 0.2% B225 | 94.8% LLDPE2 | 90-150-185-185-185-185-185-185 |

(continued)

| Masterbatch Identifier | Masterbatch Composition | | | Compounding Equipment Setpoints (Temperature, °C)* |
|---|---|---|---|---|
| | PPA | AO | Carrier Resin | |
| | 1.25% PEG8 | | | |
| MB3 | 2.5% PA12-A 2.5% PEG8 | 0.2% B225 | 94.8% LLDPE2 | 90-150-185-185-185-185-185-185 |
| MB4 | 1.25% PA12-A 3.75% PEG8 | 0.2% B225 | 94.8% LLDPE2 | 90-150-185-185-185-185-185-185 |
| MB5 | 3.75% PA12-A 1.25% PLA1 | 0.2% B225 | 94.8% LLDPE2 | 90-150-185-185-185-185-185-185 |
| MB6 | 2.5% PA12-A 2.5% PLA1 | 0.2% B225 | 94.8% LLDPE2 | 90-150-185-185-185-185-185-185 |
| MB7 | 1.25% PA12-A 3.75% PLA1 | 0.2% B225 | 94.8% LLDPE2 | 90-150-185-185-185-185-185-185 |
| MB8 | 5% PLA | 0.2% B225 | 94.8% LLDPE2 | 90-150-185-185-185-185-185-185 |
| MB9 | 5% PA6/66-A | 0.2% B225 | 94.8% LLDPE2 | 90-150-200-200-200-200-200-200 |
| MB10 | 5% PA6/66-B | 0.2% B225 | 94.8% LLDPE2 | 90-150-200-200-200-200-200-200 |
| MB11 | 5% PA6/66/12 | 0.2% B225 | 94.8% LLDPE2 | 90-150-200-200-200-200-200-200 |
| MB12 | 5% PA6/66/610-A | 0.2% B225 | 94.8% LLDPE2 | 90-150-185-185-185-185-185-185 |
| MB13 | 3.75% PA6/66/610-A 1.25% PLA1 | 0.2% B225 | 94.8% LLDPE2 | 90-150-185-185-185-185-185-185 |
| MB14 | 2.5% PA6/66/610-A 2.5% PLA1 | 0.2% B225 | 94.8% LLDPE2 | 90-150-185-185-185-185-185-185 |
| MB15 | 1.25% PA6/66/610-A 3.75% PLA1 | 0.2% B225 | 94.8% LLDPE2 | 90-150-185-185-185-185-185-185 |

* Compounding conditions listed are, from left to right, the 6-barrel zones from the feed to the last barrel zone, followed by the pelletizer adapter temperature and lastly the die temperature.

The time to eliminate surface melt fracture ("time-to-clear") in blown film extrusion was evaluated on a Lung Meng AH-42 blown film line equipped with a 42 mm single screw extruder (L/D = 24:1), a 68.58 mm diameter die with a die gap of 0.508 mm, and external bubble cooling. LLDPE1 was used as the control polymer and as the base polymer for all comparative examples and examples of the present invention. LLDPE1 at 100% concentration was extruded with the blown film extruder zone temperatures set at 150, 180, 185, and 185 °C (from upstream to downstream) and with the die temperature set to 185 °C, a screw speed of 32 RPM at a rate of 9 kg per hour corresponding to an apparent shear rate of 350 s$^{-1}$. Apparent shear rate was calculated according to the following formula:

$$\gamma_{w,a} = 6Q / (\pi D\, b^2)$$

where $\gamma_{w,a}$ is the apparent wall shear rate, Q is the volumetric flow rate, D is the average of the inside and outside diameter of the die and b is the die gap. The melt density of LLDPE1 was taken as 770 kg/m$^3$.
Under these conditions LLDPE1 was found to exhibit sharkskin melt fracture around the entire circumference of the film (i.e. 100% melt fracture).
The PPA masterbatches of Table 2 were dry mixed with LLDPE1 pellets according to the recipes in Table 3 to make extrudable compositions. The hopper of the film line extruder was allowed to run empty, and then immediately charged with the formulation to be evaluated in Table 3 and a timer was simultaneously started. The pressure before the extrusion die was measured via a pressure transducer located on the adapter between the single screw extruder and the blown film die. At 10-minute intervals the die head pressure was measured, and a film sample was collected for 1 minute and the production rate was recorded in lbs. per hour. The film was laid flat on a light table in order to facilitate visual observation of the areas of the film containing sharkskin melt fracture. The melt fracture cleared in bands parallel to the machine direction. The widths of the film exhibiting melt fracture were marked and measured. The sum of the widths of sharkskin containing areas of the film divided by the total width of the film provides the percent melt fracture. In some cases, the melt fracture exhibited decreasing intensity prior to being eliminated. Such areas of decreased intensity of melt fracture were still considered and measured as melt fracture.

After each evaluation of one of the compositions of Table 3, 15 kg of a 50% calcined diatomaceous earth masterbatch (Ingenia Polymers IP1052) ran through the film line to scour the PPA from the metal surfaces of the die and extruder. Following this purge, LLDPE1 ran through the film line for 1 hour to remove any remaining diatomaceous earth (DE) and reestablish 100% melt fracture before proceeding to the next evaluation.

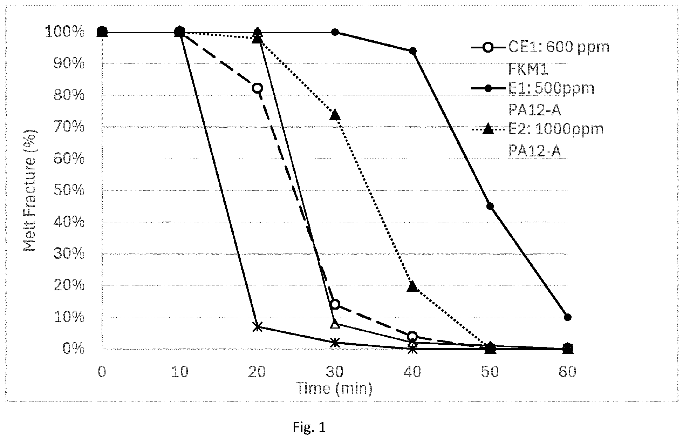

The results of the control (C), comparative examples (CE1) and examples of the present invention (E1-E19) can be found in Table 3. The time-to-clear results are also graphed in Figure 1 to 7.

Table 3 Comparative and Example Formulations and Results of Time-to-clear studies

| Ex. | MB& LDR | PPA in extrudable composition (ppm) | Processing Temp (C) | Melt Fracture after 1 hr. (%) | Change in output (%) | $\Delta P_{die}$ after 1 hr. (%) |
|---|---|---|---|---|---|---|
| Control | - | None. LLDPE1 only. | 185 | 100% | 0% | |
| CE1 | 2% CMB | 600 ppm FKM1 | 185 | 0% | +26% | -23% |
| CE2 | 1% CMB2 | 500 ppm PEG8 | 185 | 60% | -12% | -11% |
| E1 | 1% MB1 | 500 ppm PA12-A | 185 | 10% | | - |
| E2 | 2% MB1 | 1000 ppm PA12-A | 185 | 0% | | |
| E3 | 4% MB1 | 2000 ppm PA12-A | 185 | 0% | 27% | |
| E4 | 6% MB1 | 3000 ppm PA12-A | 185 | 0% | 27% | |
| E5 | 1% MB2 | 375 ppm PA12-A 125 ppm PEG8 | 185 | 16% | | |
| E6 | 1% MB3 | 250 ppm PA12-A 250 ppm PEG8 | 185 | 4% | | |
| E7 | 1% MB4 | 125 ppm PA12-A 375 ppm PEG8 | 185 | 29% | | |
| E8 | 1% MB5 | 375 ppm PA12-A 125 ppm PLA1 | 185 | 1.6% | 9% | |
| E9 | 1% MB6 | 250 ppm PA12-A 250 ppm PLA1 | 185 | 100% | | |
| E10 | 1% MB7 | 125 ppm PA12-A 375 ppm PLA1 | 185 | 100% | | |
| E11 | 1% MB8 | 500 ppm PLA1 | 185 | 50.9% | 12% | -12% |
| E12 | 2% MB5 | 750 ppm PA12-A 250 ppm PLA1 | 185 | 0 | - | |
| E13 | 1% MB12 | 500 ppm PPA6/66/610-A | 185 | 0% | 0% | |
| E14 | 1% MB13 | 375 ppm PPA6/66/610-A 125 ppm PLA1 | 185 | 9% | 6% | |
| E15 | 1% MB14 | 250 ppm PPA6/66/610-A 250 ppm PLA1 | 185 | 34.2% | 6% | |
| E16 | 1% MB15 | 125 ppm PPA6/66/610-A 375 ppm PLA1 | 185 | 77.5% | 0% | |
| E17 | 2% MB9 | 1000 ppm PPA6/66-A | 185 | 8.9% | | |
| E18 | 2% MB9 | 1000 ppm PPA6/66-A | 200 | 0% | | |

(continued)

| Ex. | MB& LDR | PPA in extrudable composition (ppm) | Processing Temp (C) | Melt Fracture after 1 hr. (%) | Change in output (%) | $\Delta P_{die}$ after 1 hr. (%) |
|---|---|---|---|---|---|---|
| E19 | 2% MB11 | 1000 ppm PPA6/66/12 | 185 | 8% | | |
| E20 | 2% MB11 | 1000 ppm PPA6/66/12 | 200 | 0% | | |

**Discussion of Experimental Results**

Referring to Table 3 and Figure 1 it can be observed that comparative example CE1 demonstrates the good performance of a traditional polymer processing aid consisting of fluoropolymer and polyethylene glycol for the removal of sharkskin in LLDPE. CE1 shows that a composition of 600 ppm of the FKM1 in LLDPE1, prepared via the masterbatch route (masterbatch CMB1), can remove 100% of the melt fracture under the test conditions within one hour. In addition, the output is increased under the same extruder conditions (RPM) by 26% respectively, and the die head pressure reduced by 23% as compared to the output of the Control.

PA12-A is a polyamide 12 homopolymer with a MFR of 45 g/10 min (235C, 2.16 kg) in powder form with a median particle size of 10 microns. The performance of PA12 as a polymer processing aid was investigated with results as shown in Figure 1 and Table 3. Example E1 shows that an extrudable composition of 500 ppm PA12-A in LLDPE1 significantly reduces sharkskin within one hour under the tested conditions. 10% of the film width still exhibits sharkskin after 1 hour. Example E2 shows that an extrudable composition of a higher concentration - that is 1000 ppm - of PA12-A completely removes melt fracture within 1 hour. Increasing the concentration of PA12-A to 2000 ppm as shown in E3 removes melt fracture from the LLDPE1 within 1 hour. The performance of PA12-A at 2000 ppm is generally comparable for removal of sharkskin to 600 ppm of FKM1. Further increasing the concentration of PA12-A to 3000 ppm as in E4 results in complete removal of sharkskin within 40 minutes, exceeding the performance of FKM1 at 600 ppm. E1-E4 demonstrate that polyamide 12 functions as a polymer processing aid in LLDPE1 under the tested conditions, although it is not as efficient as the fluoropolymer.

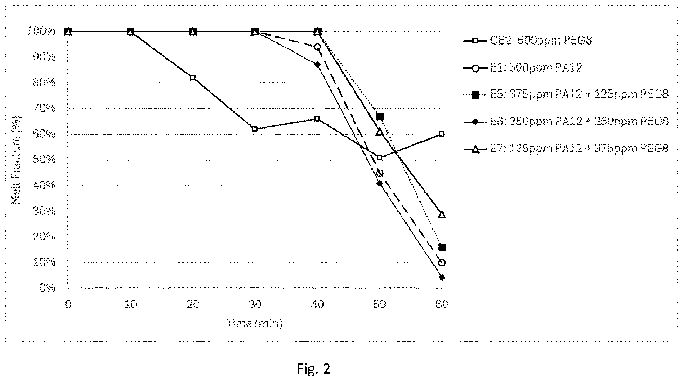

Polyethylene glycol, is well known as a synergist for fluoropolymer PPAs. It has also been suggested as a synergist for PA12 processing aids and as a processing aid on its own. PEG of 8000 g/mol (PEG8) was investigated as a polymer processing aid and as a synergist or adjuvant for PA12. Results are found in Figure 2 and Table 3. Comparative example CE2 shows the performance of 500 ppm of PEG8 in clearing sharkskin. 500 ppm was only partially successful in clearing sharkskin. After 60 minutes of extrusion time, the blown film still showed sharkskin over 60% of its surface. Examples E5, E6, and E7 demonstrate the performance of blends of PA12-A with PEG at 75:25, 50:50 and 25:75 ratios respectively. Each of these experimental runs resulted in poorer or approximately equivalent clearance of sharkskin versus 500 ppm of PA12-A alone. These tests indicate that PEG8 is can partially replace PA12-A in a PPA composition at equivalent or poorer time to clear performance. However, PEG can lead to loss of extruder output due to surging.

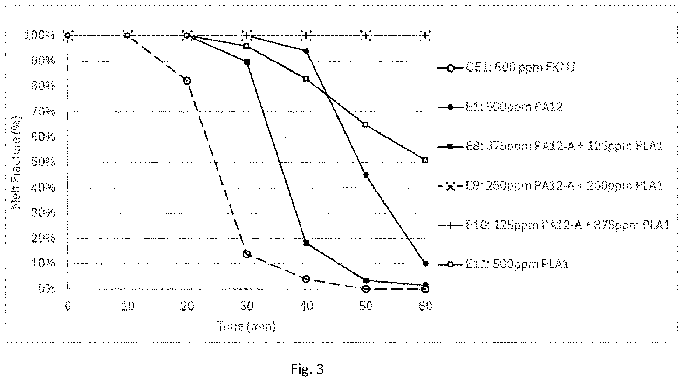

PLA1 is a poly(lactic acid) homopolymer with a MFR of 6 g/10 min (210C, 21.6 kg), a peak melting point of 155 C. Referring to Figure 3 and Table 3 the performance of PLA1 as a PPA or as a component in a PPA composition with PA12-A is demonstrated. Example E11 shows that an extrudable composition of 500 ppm PLA1 shows moderate behaviour as a PPA. Sharkskin is reduced in LLDPE1 to 50% within 60 minutes of testing time and output is increased by 12%. Unlike PEG8, PLA1 does not result in a decrease in extruder output and does not result in surging in the extruder. In fact, PLA1 at 500 ppm results in an increase in extruder output at the same RPM of 12%. E9 and E10 showed that blends of PA12-A and PLA1 at 50:50 and 25:75 ratios show no performance as PPAs under the conditions tested. This result is very surprising given that both PA12-A and PLA1 showed some performance on their own. More surprising still, experiment E8 showed that a 75:25 ratio of PA12-A to PLA1 showed very good performance as a PPA at only 500 ppm total loading. E8 films had only 1.6% sharkskin after 60 minutes of testing time and the extruder had an increase in output of 9%. The 75:25 ratio of PA12-A to PLA1 exceeds the performance of either component individually and exceeds the performance of PA12-A alone at 500 ppm. This particular ratio of PA12-A and PLA1 demonstrated synergistic performance.

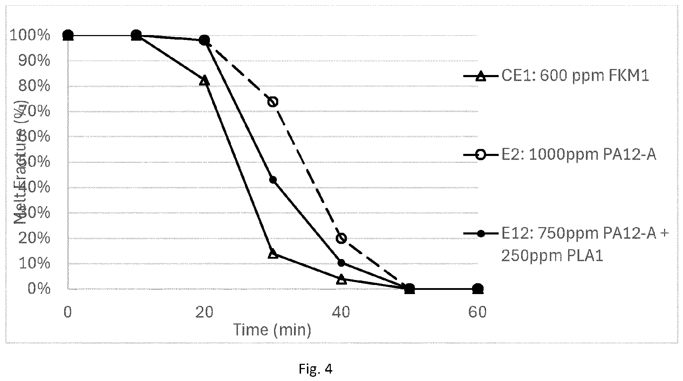

The 75:25 ratio of PA12-A to PLA1 was tested at a higher loading of 1000 ppm in experiment E12. Looking at Table 3 and Figure 4 the performance of 1000 ppm PA12-A (E2) can be compared to the performance of 750 ppm of PA12-A with 250 ppm of PLA1 (E12). E12 shows complete removal of sharkskin at 50 minutes. The 75:25 ratio of PA12-A to PLA1 shows better performance than the equivalent loading of PA12-A alone.

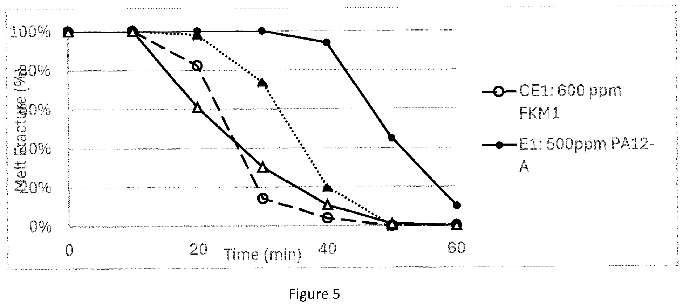

PA6/66/610-A is a PA 6/66/610 copolymer with a melting point of 156 °C and an MFR of 14 g/10 min (235C, 21.6 kg). Referring to Figure 5 and Table 3 the performance of PA6/66/610-A as a PPA is demonstrated. Example E13 shows that an extrudable composition of 500 ppm PA6/66/610-A shows very good performance as a PPA. Sharkskin is eliminated in LLDPE1 within 60 minutes of testing time and output is unaffected. Comparing back to E1 and E2 we see that PA6/66/610-A is a more efficient PPA at 500 ppm than PA12-A is at 500 ppm and even 1000 ppm.

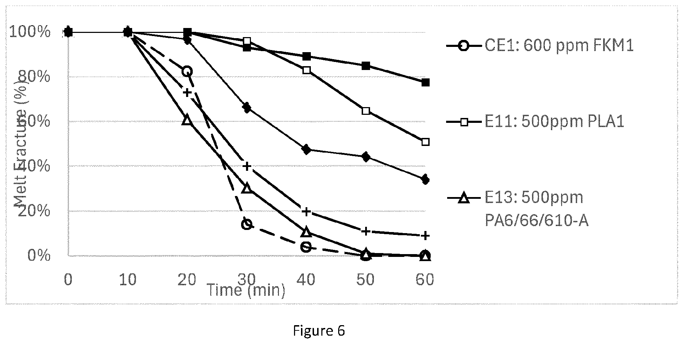

Referring to Figure 6 and Table 3 the performance of PLA1 as a component in a PPA composition with PA6/66/610-A is demonstrated. As noted above, example E11 shows that an extrudable composition of 500 ppm PLA1 shows moderate behaviour as a PPA. Sharkskin is reduced in LLDPE1 to 50% within 60 minutes of testing time and output is increased by 12%. PLA1 results in an increase in extruder output and does not result in surging in the extruder. E16 demonstrates that 500 ppm of a blend of PA6/66/610-A and PLA1 at a 25:75 ratio shows poorer performance as a PPA than either component alone at 500 ppm under the conditions tested. E15 demonstrates that 500 ppm of a blend of PA6/66/610-A and PLA1 at a 50:50 ratio shows performance intermediate to either component alone under the conditions tested. Experiment E14 showed that a 75:25 ratio of PA6/66/610-A to PLA1 showed better performance than the 25:75 and 50:50 ratios of PA6/66/610-A to PLA at 500 ppm total loading. Sharkskin was reduced to 9% of the film width within 60 minutes and the output from the extruder under constant RPM was increased by 6%. The 75:25 ratio of PA6/66/610-A to PLA1 is more efficient than the 50:50 or 25:75 ratios. This same ratio of polyamide to PLA1 was the most efficient in the case of PA12-A as demonstrated in examples E8 to E10. PLA-1 is more effective as a component in an extrudable composition with these two polyamides tested at this 75:25 ratio of PA to PLA. The criticality of the ratio of PA to PLA is demonstrated for maximizing the performance of these extrudable compositions.

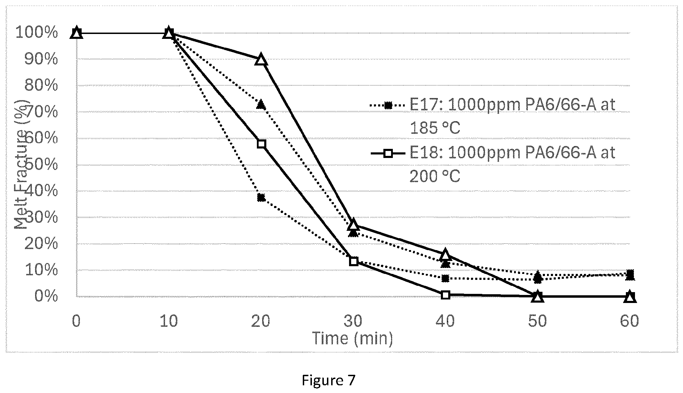

PA6/66-A is a polyamide 6/66 copolymer with a peak melting point of 192 °C. PA6/66/12 is a polyamide 6/66/12 with a melting point of 188C. The performance of these two polyamides as polymer processing aids, as well as the effect of processing temperature were investigated. Referring to Figure 7 and Table 3 several observations can be made. E18 and E20 show that 1000 ppm of PA6/66-A and PA6/66/12 respectively perform well as PPAs at a processing temperature of 200 °C - that is above the melting points of the polyamides. Sharkskin was completely eliminated in 60 minutes for both polyamides. However, experiments E17 and E19 show that the same polyamide 6/66 and 6/66/12 do not perform as well as polymer processing aids at a processing temperature of 185 °C - that is, below their peak melting points. Under the tested condition they both demonstrate some performance as PPAs, but still show approximately 8% sharkskin after 60 minutes of testing time. It is understood that at lower processing temperatures and equivalent output/apparent shear rates, the shear stress will be higher than at higher temperatures. This will tend to exacerbate sharkskin. In order to show that the poorer performance of the polyamide as a PPA was due to processing below its melting point and not solely due to the higher shear stress at lower processing temperatures some capillary extrusion was done on PA12-A.

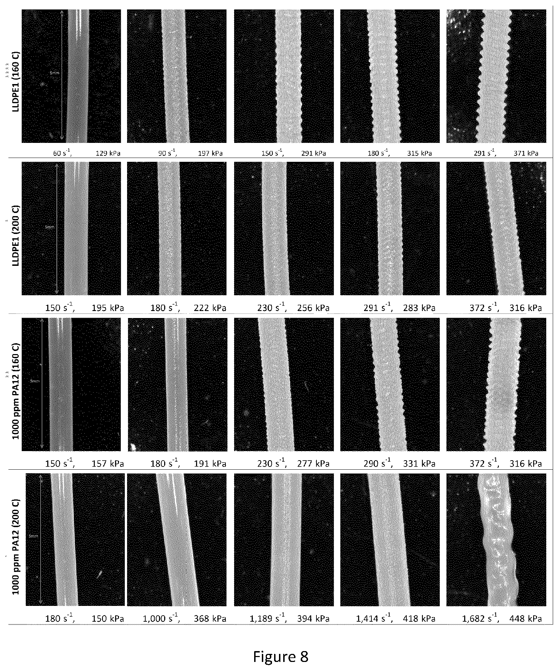

A set of capillary extrusions were performed for LLDPE1 and formulation E2 (1000 ppm of PA12-A in LLDPE1) at 160 °C and 200 °C. PA12-A has a melting point of 180 °C and so these experiments were carried out at temperatures significantly above and below the melting point of the PA12. The use of the capillary rheometer for these experiments provided more accurate temperature control than might be found in the single screw extruder and blown film line. Experiments were carried out on a Rosand RH200. Figure 8 shows the results of these experiments. The first row of photos show extrusions of LLDPE1 with no PPA at a temperature of 160 °C. Each photo represents a single extrusion at constant shear rate. In addition to the shear rate, the shear stress at the wall was calculated. The first row of photos show that the LLDPE1 extrusion is smooth, with no observable sharkskin at a shear rate of $60s^{-1}$ and shear stress of 129 kPa. However, on increasing the shear rate to $90s^{-1}$ or 197 kPa, sharkskin is apparent. The severity of the sharkskin increases as shear rate and shear stress are increased further. The second row of photos shows the effect of increasing the processing temperature of the LLDPE1 in the absence of PPA. As can be seen, the LLDPE1 can be extruded at a higher rate of $150\ s^{-1}$ without sharkskin. At $180\ s^{-1}$ sharkskin becomes apparent. The effect of increasing temperature is to allow extrusion at higher throughputs (higher shear rates) without sharkskin. It may be more instructive to look at the shear stress for the onset of sharkskin than the shear rate when considering different processing temperatures. Considering the last two rows of photos the effect of PA12-A as a processing aid at 160 °C (below the PA12-A melting point) and at 200 °C (above the PA12-A melting point) the effect of processing temperature on PPA performance can be discerned. Prior to the test runs in the bottom row of photos the composition E2 was charged to the capillary rheometer and extruded through the capillary bore at 200 °C and $350\ s^{-1}$ shear rate 4 times (i.e. 4 full bores where each bore represents approximately 20 minutes of extrusion time). The pressure was monitored as a function of time. The inclusion of the PPA decreases the pressure drop across the capillary as it coats the die. The pressure drop stabilizes when the die is fully coated. Composition E2 comprised of 1000 ppm of PA12-A, provides stable pressure drop, representing full coating of the die, by the 3rd extrusion run. Nonetheless, a fourth extrusion run confirms full coating and was carried out before the increasing shear rate experiments. The increasing shear rate experiments shown in the bottom row of photos in Figure 8 show that composition E2 delays the onset of sharkskin to somewhere between 1189 and $1414\ s^{-1}$ (394 and 418 kPa shear stress respectively). This represents a very considerable increase versus the 150 to $180\ s^{-1}$ shear rate in the absence of PPA at 200 °C. Moreover, the sharkskin effect was mild, and did not increase to the magnitude shown in the LLDPE1 without PPA. At the highest rates and stresses gross melt fracture appeared before any large magnitude sharkskin. This very good performance of composition E2 at 200 °C can be compared with its relatively poorer performance at 160 °C. At 160 °C composition E2 showed more modest performance as a PPA. Comparing the 3rd and 1st row of photos in Figure 4 we can see that the onset of sharkskin was delayed from between 60 to $90\ s^{-1}$ in the neat LLDPE (no PPA) to between 180 and $230\ s^{-1}$ with the PPA at 160C. At this range of shear rates at 160 °C the shear stresses are in the range of 191 to 277 kPa. Further increase in shear rates and stresses resulted in considerable increase in the magnitude of the defects. The PPA coating appeared to be unstable or inconsistent as shown by the pressure readings in the capillary. During the 4 conditioning runs at 160 °C and $350\ s^{-1}$ the

average pressure drop stabilized by the fourth run. However, this average was marked by wider variations than seen at 200 °C. The standard deviation of the pressure readings at 160 °C was 3.6% and at 200 °C was 0.6%. The testing results at 160 °C demonstrated that the polyamide still has some performance as a PPA below its melting point. However, performance is significantly reduced. It is believed that when the polyamide 12 is in solid form, it cannot spread readily to form a consistent layer thickness on the die. This may explain the poorer performance at 160 °C and the observed variation in pressure drop across the capillary die during the conditioning runs.

**Claims**

1. A method for reducing or removing melt fracture or die-lip build-up in a polyolefin extrusion process comprising extruding an extrudable polyolefin composition comprising a polyolefin and from about 0.01 to about 1 weight % of a polymer processing aid, based on the total weight of the polyolefin composition, wherein the polymer processing aid comprises an aliphatic or semi-aromatic polyamide; wherein the polyamide is either:

   a. semi-crystalline having a melting point below about 210 °C, or
   b. amorphous having a glass transition temperature of less than about 150 °C;

   and the composition is extruded at a processing temperature equal to or greater than the melting point or glass transition temperature of the polyamide.

2. Use of a polymer processing aid to reduce or remove melt fracture or die lip build-up in an extrudable polyolefin composition, wherein the polymer processing aid is used in an amount of from about 0.01 to about 1 weight %, based on the total weight of the polyolefin composition, and comprises an aliphatic or semi-aromatic polyamide;

   wherein the polyamide is either

   a. semi-crystalline having a melting point below 210 °C, or
   b. amorphous having a glass transition temperature of less than 150 °C

   and the composition is extruded at a processing temperature equal to or greater than the melting point or glass transition temperature of the polyamide.

3. An extrudable composition comprising a polyolefin and a polymer processing aid, the polymer processing aid being present in an amount of from about 0.01 to about 1 weight-% based on the total weight of the polyolefin composition, and wherein the polymer processing aid comprises an aliphatic or semi-aromatic polyamide;

   wherein the polyamide is either

   a. semi-crystalline having a melting point below 210 °C, or
   b. amorphous having a glass transition temperature of less than 150 °C

   and the composition is extruded at a processing temperature equal to or greater than the melting point or glass transition temperature of the polyamide.

4. A masterbatch composition comprising a polyolefin and a polymer processing aid, the polymer processing aid being present in an amount of from about 1 to about 80 weight-% based on the total weight of the polyolefin composition, and wherein the polymer processing aid comprises an aliphatic or semi-aromatic polyamide;

   wherein the polyamide is either

   a. semi-crystalline having a melting point below 210 °C, or
   b. amorphous having a glass transition temperature of less than 150 °C

   and the composition is extruded at a processing temperature equal to or greater than the melting point or glass transition temperature of the polyamide.

5. A method, use, extrudable composition or masterbatch composition according to any preceding claim, wherein the polymer processing aid further comprises poly(lactic acid).

6. The use, method or composition of claim 5 wherein the ratio of aliphatic or semi-aromatic polyamide to poly(lactic acid) is from about 55:45 to about 95:5.

7. The use, method or composition of any preceding claim, wherein the aliphatic or semi-crystalline polyamide is selected from the list: PA 6/66/610, PA 6i/6t, PA 11, PA 12, PA 5/13, PA 6/12, PA 6/66, PA 6/66/12, PA 6/66/610, and PA 10/10.

8. The use, method or composition of any preceding claim, wherein the aliphatic or semi-crystalline polyamide has an average molecular weight of greater than about 5,000 g/mol.

9. The use, method or composition of any preceding claim, wherein the aliphatic or semi-crystalline polyamide has a Melt Flow Rate (ASTM D1238, 235 °C, 2.16 kg) of greater than about 1 g/10 minutes.

10. The use, method or composition of any preceding claim, wherein the aliphatic or semi-crystalline polyamide is a blend of two or more polyamides.

11. The use, method or composition of claim 10, where the blend of polyamides is of the same polyamide type, and have a difference in Melt Flow Rate (ASTM D1238, 235 °C, 2.16 kg) of greater than 1 g/10 minutes.

12. The use method or composition of any preceding claim, wherein the aliphatic or semi-crystalline polyamide(s) are branched.

13. The use, method or composition of claim 5, wherein the poly(lactic acid) has an average molecular weight of greater than about 5,000 g/mol.

14. The use, method or composition of claim 5 or 13 wherein the poly(lactic acid) has a Melt Flow Rate (ASTM D1238, 235 °C, 2.16 kg) from 0.5 to 150.

15. A use, method, or composition as claimed in any of claims 1-3 or 5-14 wherein the extrudable polyolefin composition further comprises a poly(oxyalkylene) in an amount of from 0.0050 to 0.03 weight %, based on the total weight of the polyolefin composition.

16. A use, method, or composition of claim 15 wherein the poly(oxyalkylene) is poly(ethylene glycol) with an average molecular weight of 1,000 to 100,000 g/mol.

17. The use, method or composition as claimed in any preceding claim, wherein the polyolefin is selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

18. The use, method or composition as claimed in any preceding claim, wherein the polyolefin is a linear low-density polyethylene with a density of from 0.91 to 0.925 g/cc and a Melt Flow Index (ASTM D1238, 190 °C, 2.16 kg) of less than 10.

19. The use, method or composition as claimed in any preceding claim, wherein the polyolefin is a polyethylene produced using a single-site catalyst.

20. A use, method, or composition as claimed in any of claims 1-3 or 4-19 wherein the extrudable composition further comprises one or more polymer additives selected from the following: hindered phenols, phosphites, liquid polymeric phosphite antioxidants, metal stearates, hydrotalcites, zinc oxide, slip, anti-blocking, anti-static additives, ultraviolet light absorbers, hindered amine light stabilizers, and combinations thereof.

21. A use, method, or composition as claimed in any of claims 4-14 wherein the masterbatch composition further comprises one or more polymer additives selected from the following: poly(oxyalkylene), hindered phenols, phosphites, liquid polymeric phosphite antioxidants, metal stearates, hydrotalcites, zinc oxide, slip, anti-blocking, antistatic additives, ultraviolet light absorbers, hindered amine light stabilizers, and combinations thereof, wherein the one

**EP 4 775 378 A1**

or more polymer additives are present in a combined amount of from about 5 to about 95 weight %, based on the total weight of the polyolefin composition.

22. An extruded polyolefin product whenever produced using the composition, method or use of any preceding claim.

**21**

Fig. 1

Fig. 2

Fig. 3

Fig. 4

Figure 5

Figure 6

Figure 7

Figure 8

# EUROPEAN SEARCH REPORT

**Application Number**

EP 25 15 1608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 431 563 A1 (ARKEMA FRANCE [FR]) 18 September 2024 (2024-09-18) | 1-8,10, 12,16-22 | INV. B29C48/95 |
| Y | * the whole document * | 5,13-15 | ADD. |
| | ----- | | |
| Y | EP 4 488 328 A1 (INGENIA POLYMERS INT S A [LU]) 8 January 2025 (2025-01-08) * paragraphs [0023], [0075]; claim 12 * | 5,13-15 | B29K23/00 B29K67/00 |
| | ----- | | |
| X | WO 2024/256965 A1 (NOVA CHEM INT SA [CH]) 19 December 2024 (2024-12-19) | 1-4,7, 10, 15-18,20 | |
| A | * the whole document * | 9,11 | |
| | ----- | | |

**TECHNICAL FIELDS SEARCHED (IPC)**

B29C
B29K

The present search report has been drawn up for all claims

| Place of search | Date of completion of the search | Examiner |
|---|---|---|
| Munich | 7 July 2025 | Paulme, Camille |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1608

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | | Publication date | Patent family member(s) | | Publication date |
|---|---|---|---|---|---|
| EP 4431563 | A1 | 18-09-2024 | EP | 4431563 A1 | 18-09-2024 |
| | | | WO | 2024189104 A1 | 19-09-2024 |
| EP 4488328 | A1 | 08-01-2025 | EP | 4488328 A1 | 08-01-2025 |
| | | | WO | 2025008354 A1 | 09-01-2025 |
| WO 2024256965 | A1 | 19-12-2024 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2024147358 A
- WO 2023017327 A1
- EP 0308090 A2
- WO 2024189104 A
- WO 2024256965 A1
- US 8981042 B
- PA 666610 A

### Non-patent literature cited in the description

- Polymer Processing Additives for Melt Fracture Control. **HATZIKIRIAKOS, S. G., & MIGLER, K. B**. Applied Polymer Rheology: Polymeric Fluids with Industrial Applications. 2012, 29-58
- Compendium of Polymer Terminology and Nomenclature, IUPAC Recommendations. RSC Publishing, 2008
- *CHEMICAL ABSTRACTS*, 2082-79-3
- *CHEMICAL ABSTRACTS*, 6683-19-8
- *CHEMICAL ABSTRACTS*, 40601-76-1
- *CHEMICAL ABSTRACTS*, 27676-62-6
- *CHEMICAL ABSTRACTS*, 1709-70-2
- *CHEMICAL ABSTRACTS*, 31570-04-4
- *CHEMICAL ABSTRACTS*, 26741-53-7
- *CHEMICAL ABSTRACTS*, 38613-77-3
- *CHEMICAL ABSTRACTS*, 154862-43-8
- *CHEMICAL ABSTRACTS*, 939402-02-5
- *CHEMICAL ABSTRACTS*, 112-84-5
- *CHEMICAL ABSTRACTS*, 301-02-0
- *CHEMICAL ABSTRACTS*, 112926-00-8
- *CHEMICAL ABSTRACTS*, 68855-54-9
- *CHEMICAL ABSTRACTS*, 14807-96-6
- *CHEMICAL ABSTRACTS*, 1344-01-0
- *CHEMICAL ABSTRACTS*, 31566-31-1
- *CHEMICAL ABSTRACTS*, 1843-05-6
- *CHEMICAL ABSTRACTS*, 2725-22-6
- *CHEMICAL ABSTRACTS*, 106990-43-6
- *CHEMICAL ABSTRACTS*, 71878-19-8
- *CHEMICAL ABSTRACTS*, 192268-64-7
- *CHEMICAL ABSTRACTS*, 82451-48-7
- *CHEMICAL ABSTRACTS*, 193098-40-7
- *CHEMICAL ABSTRACTS*, 65447-77-0